# EUROPÄISCHE PATENTSCHRIFT

(11) **EP 2 630 514 B1**
(45) Veröffentlichungstag und Bekanntmachung des Hinweises auf die Patenterteilung: **27.12.2017**
(21) Anmeldenummer: 11754431.2
(22) Anmeldetag: 12.09.2011
(51) Int. Cl.: G01S 13/48, G01S 13/93, G01S 15/93, G01S 13/58

(54) **VERFAHREN UND VORRICHTUNG ZUR OBJEKTERFASSUNG**
METHOD AND DEVICE FOR DETECTING OBJECTS
PROCÉDÉ ET DISPOSITIF DE DÉTECTION D'OBJETS

(30) Priorität: 20.10.2010 DE 102010042653
(43) Veröffentlichungstag der Anmeldung: 28.08.2013
(73) Patentinhaber: Robert Bosch GmbH, 70442 Stuttgart (DE)
(72) Erfinder: SCHUMANN, Michael, 70597 Stuttgart (DE); NIEMZ, Volker, 71277 Rutesheim (DE)
(86) Internationale Anmeldenummer: PCT/EP2011/065748
(87) Internationale Veröffentlichungsnummer: WO 2012/052229

(56) Entgegenhaltungen:
- DE-A1-102004 004 492
- JP-A- 6 174 821

## Beschreibung

### Stand der Technik

Auf dem Gebiet der Erfindung, d.h. die pulsechobasierte Objekterfassung, sind Verfahren bekannt, die insbesondere durch akustische Schallwellen die Umgebung von Fahrzeugen abtasten. Insbesondere ist bekannt, die durch den Dopplereffekt erzeugte Frequenzverschiebung zur Erfassung der Geschwindigkeit von Objekten zu verwenden, spezifisch die Relativgeschwindigkeit zwischen Wandler und reflektierendem Objekt.

Diese Verfahren werden insbesondere für Einparksysteme oder allgemein Fahrerassistenzsysteme verwendet, wobei jeweils ein Wandler einen für den Wandler spezifischen Sektor abdeckt. Grundsätzlich besteht das Problem, dass ein breiter Sektor zwar einen großen Gefahrenbereich abdeckt, jedoch nicht besonders richtungsselektiv ist, während ein schmaler Sektor richtungsselektiv ist, jedoch nur einen kleinen Gefahrenbereich abdeckt. Ein Vielzahl von aneinandergereihten Wandlern mit schmalen Sektoren sind jedoch kostenintensiv und sind mit einer komplexen Montage verknüpft.

In der Druckschrift WO 07/147533 ist ein Verfahren beschrieben, bei dem modulierte Sendepulse, die mit einer Richtkeule ausgesandt werden, zur Erfassung verschiedener Objekte mit unterschiedlichen Doppler verschobenen Frequenzen verwendet werden. Die Modulierung ist jedoch aufwändig, erfordert präzise und synchronisierte Empfangsmechanismen und schränkt die Reichweite ein (aufgrund einer einzuhaltenden, minimalen Modulationsfrequenz).

In der DE 10 2004 004 492 A1 ist ein Abstandserkennungsverfahren beschrieben, wobei mehrere Radar-Richtkeulen durch eine Phasenverschiebung zwischen mehreren Antennenelementen gezielt ausgerichtet werden und durch eine Auswertung der Dopplerverschiebungen von empfangenen Radar-Echos eine Entfernungsinformation erfasst wird.

Bekannte Verfahren zur Objekterfassung sind somit nicht richtungsselektiv, oder erfordern einen hohen Aufwand. Es ist daher eine Aufgabe der Erfindung ein Verfahren und eine Vorrichtung vorzusehen, mit denen sich unter Verwendung von einfachen Mitteln eine Umgebungsabtastung vorzusehen, die eine hohe Richtungsauflösung bzw. Raumauflösung erlaubt.

### Offenbarung der Erfindung

Diese Aufgabe wird gelöst durch das Verfahren und die Vorrichtung gemäß der unabhängigen Ansprüche.

Die Erfindung ermöglicht mit einfachen Mitteln eine räumlich aufgelöste Unterscheidung von Objekten bzw. eine spezifische Abtastung für schmale Winkelbereiche. Insbesondere wird die Präzision gegenüber dem Stand der Technik dadurch erhöht, dass verschiedene Frequenzverschiebungen eines breiten Erfassungssektors nicht gegenseitig überlagert werden und somit das Empfangssignal stören, sondern getrennt betrachtet werden. Die Erfindung ermöglicht gegenüber dem Stand der Technik eine deutlich spezifischere Auftrennung von Objekten, ohne dass aufwändige Wandleranordnungen oder Schaltungen erforderlich sind. Vor allem lassen sich die Wandler bei Ausführung der Erfindung besonders unauffällig in eine Fahrzeugaußenseite integrieren, wobei montagebedingte Auswirkungen auf das Nahfeld des akustischen Systems nicht zu einer schlechteren Leistung des Systems führen, sondern vielmehr auf einfache Weise die Richtungstrennung ermöglichen. Insbesondere wird eine Totwinkelerfassung möglich, die mit herkömmlichen Systemen nicht zu erreichen war, ohne auf mehrere Wandler mit schmalem Sensorfeld zurückzugreifen. Vor allem bei fahrzeugbezogenen Anwendungen führt die erfindungsgemäße hohe Richtungsselektivität zu einer deutlich verkürzten Reaktionszeit, wenn sich das Fahrzeug auf Hindernisse zubewegt. Gleichzeitig werden Fehlalarme durch vermeintliche Hindernisse mit der erfindungsgemäß hohen Richtungsselektivität vermieden. Ferner können Objekte in Ihrer Ausbreitung und Bewegung im Vergleich zum Stand der Technik deutlich besser erfasst werden.

Die Erfindung beruht auf der Trennung unterschiedlicher Transmissionsrichtungen (d.h. Richtkeulen) anhand unterschiedlicher Dopplerverschiebungen. Da die Dopplerverschiebung nur von einer radialen Bewegungskomponente zwischen reflektiertem Objekt und dem Wandler (bzw. der Antenne) abhängt und nicht von tangentialen Bewegungskomponenten, bilden sich bei verschiedenen Richtkeulen (d.h. verschiedenen Hauptrichtungen bzw. Hauptwinkeln) verschieden starke Dopplerverschiebungen aus, insbesondere da das Verhältnis von tangentialen zu radialen Bewegungskomponenten abhängig ist von der Orientierung von Objekt und Wandler.

Wenn somit der Wandler an einem Fahrzeug angeordnet ist, können mehrere Richtkeulen ein und desselben Wandlers zu mehreren Signalkomponenten führen, die der Wandler empfängt, und die unterschiedlich starke Frequenzverschiebungen aufgrund des Dopplereffekts haben. Die mehreren Richtkeulen desselben Wandlers werden anhand der Signalkomponenten unterschieden, die sich in ihrer Frequenzverschiebung unterscheiden. Durch diese Unterscheidung ergibt sich eine höhere Winkelauflösung gemäß den unterschiedlichen Richtkeulen. Ein und derselbe Wandler stellt daher nicht nur eine Pulsechoinformation (in Form einer Laufzeit bzw. eines Abstands oder einer andere objektspezifischen Eigenschaft) bereit, sondern für jede Richtkeule eine Pulsechoinformation. Die Pulsechoinformation wird im Rahmen einer Objekterfassung ermittelt und ausgewertet (beispielsweise hinsichtlich einer Laufzeit bzw. eines Abstands).

Die Erfindung betrifft ein Verfahren zur fahrzeuggestützten Objekterfassung. Eine Objekterfassung kann insbesondere vorgesehen werden durch Erfassen der Präsenz eines Objekts oder durch Erfassen eines Abstands zwischen Wandler und Objekt oder durch Erfassen anderer Objektmerkmale. Ein Puls wird in eine Umgebung mittels eines Wandlers ausgesendet. Der Wandler ist an einem Fahrzeug, insbesondere an einem Kraftfahrzeug wie ein PKW oder LKW angeordnet und ist vom Fahrzeug aus nach außen gerichtet. Mittels des Wandlers wird ein Puls erfasst, der von einem Objekt in der Umgebung zurückgeworfen wird. Der erfasste Puls entspricht dem abgegebenen und vom Objekt zurückgeworfenen Puls. Der Wandler (bzw. das Fahrzeug) und das Objekt bewegen sich relativ zueinander. Das mit dem Wandler versehene Fahrzeug kann sich beispielsweise im Rahmen eines Einparkvorgangs auf einem Untergrund bewegen, während auf dem Untergrund stehende weitere Fahrzeuge (oder andere verkehrsrelevante Objekte) sich nicht bewegen, so dass die Bewegung des einparkenden Fahrzeugs der Relativbewegung des Wandler entspricht.

Das Aussenden und/oder das Erfassen wird gemäß einer Richtcharakteristik des Wandlers ausgeführt, die mindestens zwei Richtkeulen aufweist. Der Puls kann von dem selben Wandler, der die Richtkeulen aufweist, erfasst werden, der auch den Puls aussendet. Alternativ kann der Puls von einem Wandler ausgesendet werden, während ein anderer Wandler den zurückgeworfenen Puls empfängt. Hierbei dann der aussendende Wandler eine Richtcharakteristik mit mehreren Richtkeulen aufweisen oder nicht, während der empfangende Wandler vorzugsweise eine Richtcharakteristik mit mehreren Richtkeulen aufweist. Es genügt daher, wenn der empfangende Wandler eine Richtcharakteristik mit mehreren Richtkeulen aufweist.

Ferner werden Signalkomponenten des zurückgeworfenen Pulses, die unterschiedliche Frequenzverschiebungen aufweisen, anhand der Frequenzverschiebung getrennt. Die mehreren Richtkeulen desselben Wandlers werden anhand der unterschiedlichen Frequenzverschiebungen der Signalkomponenten voneinander getrennt bzw. unterschieden. Für die unterschiedlichen Signalkomponenten wird jeweils eine Objekterfassung durchgeführt, wobei zwischen den Richtkeulen unterschieden wird.

Zudem können die Signalkomponenten des zurückgeworfenen Pulses, die unterschiedliche Frequenzverschiebungen aufweisen, anhand der unterschiedlichen Frequenzverschiebung jeweils einer der Richtkeulen zugeordnet werden.

Jeweils eine Objekterfassung wird für jede der Richtkeulen ausgeführt, wodurch die unterschiedlichen Richtkeulen getrennt zur Objekterfassung verwendet werden. Das Unterscheidungsmerkmal der Signalkomponenten ist die Frequenzverschiebung gegenüber dem gesendeten Puls. Anhand dieses Merkmals werden die Signalkomponenten in die Richtkeulen aufgetrennt. Das Verfahren kann gemäß einem Aspekt als ein Frequenzmultiplexverfahren betrachtet werden, wobei die Frequenztrennung durch unterschiedliche Dopplerverschiebung erreicht wird. Gemäß einem weiteren Aspekt kann das Verfahren als Richtungsmultiplexverfahren (bzw. Raummultiplexverfahren) betrachtet werden, wobei die unterschiedlichen Richtungen der Richtkeulen den Raum unterteilen, und wobei auf die unterschiedlichen Richtungen zugegriffen werden kann durch Auswahl bestimmter Signalkomponenten, die anhand der Frequenzverschiebung zu unterscheiden sind.

Gemäß einer Ausführungsform werden Objektkomponenten, die durch unterschiedliche Richtkeulen (d.h. unterschiedlichen Signalkomponenten) erfasst werden, zu einem gemeinsamen Objekt zugeordnet, wenn für die Objektkomponenten vergleichbare Abstände erfasst werden.

Weiterhin werden Objektkomponenten, die durch unterschiedliche Richtkeulen (d.h. unterschiedlichen Signalkomponenten) erfasst werden, zu unterschiedlichen Objekten in den unterschiedlichen Richtkeulen bzw. Signalkomponente zugeordnet werden, wenn für die Objektkomponenten unterschiedlichen Abstände erfasst werden.

Schließlich wird eine Objektkomponente, die in nur einer oder in einer Untergruppe der Richtkeulen erfasst wird, zu einem Objekt zugeordnet wird, das sich nur in dieser oder in der Untergruppe der Richtkeulen befindet.

Dadurch wird die erfindungsgemäße Auflösung der Richtcharakteristik anhand der Richtkeulen und der damit verknüpften Dopplerverschiebung zur höheren räumlichen Auflösung der Objekte in der Umgebung verwendet. Es lassen sich mehrere Objekte unterscheiden und die Größe der Objekte kann höher aufgelöst werden.

Gemäß einer Ausführungsform der Erfindung wird eine Bewegung eines Objekts aufgrund der unterschiedlichen Ausrichtungen der Richtkeulen in Radialbewegungskomponenten aufgeteilt wird, die zu den unterschiedlichen Frequenzverschiebungen der Pulse führen. Für jede Richtkeule wird eine Ortsinformation (die eine Abstandsinformation und eine Winkelinformation bzw. einen Koordinatenpunkt umfasst) anhand einer Pulslaufzeit derjenigen Signalkomponente erzeugt, die der jeweiligen Richtkeule zugeordnet ist, oder es wird für jede Signalkomponente eine Ortsinformation (die eine Abstandsinformation umfasst) anhand der Pulslaufzeit dieser Signalkomponente erzeugt. Für mehrere oder für jede Richtkeule oder für mehrere oder für jede Signalkomponente wird eine Radialgeschwindigkeitsinformation anhand der Frequenzverschiebung der betreffenden Signalkomponente erzeugt, bzw. anhand der Frequenzverschiebung derjenigen Signalkomponente, die der jeweiligen Richtkeule zugeordnet ist.

Eine Zuordnung zwischen Richtkeule und Signalkomponente kann eine Ermittlung einer winkelbezogenen Orientierung eines Objekts zu dem Fahrzeug umfassen, beispielsweise durch optische Erfassung oder durch eine pulsechobasierten Abtastung, insbesondere mittels Ultraschall.

Die Ortsinformation kann erzeugt werden durch Kombinieren eines Abstands, der sich aus der Pulslaufzeit ergibt, mit der Ausrichtung der zugehörigen Richtkeule. Die Ortsinformation gibt Koordinaten eines Polarkoordinatensystems oder eines kartesischen Koordinatensystems wieder.

Der Puls kann als Ultraschallpuls oder als elektromagnetischer Puls vorgesehen werden, insbesondere als elektromagnetischer Mikrowellenpuls. Der aussendende Wandler bzw. der empfangende Wandler kann daher ein akustischer Wandler, insbesondere ein Piezoelement, sein, oder kann eine Antenne (beispielsweise eine Patch-Antenne) sein.

Der ausgesendete Puls wird mit einem vordefinierten Frequenzverlauf vorgesehen, vorzugsweise mit einer konstanten Frequenz oder mit einem Frequenzverlauf, der sich durch Anregung mit einer konstanten Frequenz ergibt. Der erfasste Puls wird verglichen mit dem ausgesendeten Puls, insbesondere um die Frequenzverschiebung zu erfassen.

Das Verfahren wird insbesondere zur Erfassung einer Umgebung eines Fahrzeugs verwendet. Der Puls wird von dem Fahrzeug aus ausgesendet und empfangen, wobei der mindestens eine Wandler an einer Außenseite des Fahrzeugs angeordnet und in die Umgebung ausgerichtet ist.

Eine betreffende Ausführungsform der Erfindung sieht vor, dass sich das Fahrzeug relativ zu dem Objekt und auf einem Untergrund bewegt, wobei das Objekt ortsfest auf dem Untergrund angeordnet ist. Insbesondere wird das Verfahren für Einparkassistenzsysteme verwendet, wobei das Objekt ein geparktes Fahrzeug ist. Das Verfahren ist als Einparkassistenzverfahren vorgesehen ist, das einen zulässigen Fahrbereich (visuell oder akustisch) darstellt. Der dargestellte zulässige Fahrbereich basiert auf der Objekterfassung.

Der Puls wird als akustischer Puls ausgesendet und/oder erfasst mit einer Richtcharakteristik, in der mindestens zwei Richtkeulen durch Schallführungselemente, beispielsweise ein Trichter oder eine trichterförmige Halterung, in der der Wandler zurückgesetzt angeordnet ist, ausgebildet werden. Die Richtkeulen können ferner durch eine Anordnung von Antennenelementen erzeugt werden, wobei die Richtkeulen sich in bekannter Weise aus der Fouriertransformierten des Abstrahlungsverlaufs entlang der Antennenelemente ergeben.

Die Erfindung wird ferner vorgesehen durch eine Vorrichtung zur fahrzeuggestützten Objekterfassung. Diese umfasst einen Wandler mit einer Richtcharakteristik, die mindestens zwei Richtkeulen aufweist. Der Wandler ist zur Befestigung an einem Fahrzeug eingerichtet. Die Vorrichtung umfasst ferner eine mit dem Wandler verbundene frequenzselektive Signaltrennungseinrichtung, die eingerichtet ist, Signale des Wandlers zu empfangen und in Signalkomponenten unterschiedlicher Frequenz zu trennen. Die Vorrichtung umfasst schließlich eine Laufzeiterfassungseinrichtung, die mit der Signaltrennungseinrichtung verbunden ist. Die Laufzeiterfassungseinrichtung ist eingerichtet, für zumindest eine der Signalkomponenten eine Laufzeit zu erfassen, vorzugsweise für zumindest zwei der Signalkomponenten, die hinsichtlich ihrer Frequenz von der Signaltrennungseinrichtung getrennt wurden. Die frequenzselektive Signaltrennungseinrichtung ist ein Filter, der mindestens zwei Frequenzen voneinander trennt, d.h. ein Tief- oder ein Hochpass. Die frequenzselektive Signaltrennungseinrichtung kann ferner eingerichtet sein, aus dem empfangenen Signal das Frequenzspektrum zu erzeugen, und Teilspektren zu unterscheiden, die in unterschiedlichem Maße frequenzverschoben sind (einschließlich einer Verschiebung von null). Die Signaltrennungseinrichtung kann eingerichtet sein, relative Maxima in dem Frequenzspektrum zu erkennen und anhand der Maxima die Signalkomponenten unterschiedlicher Frequenzverschiebung zu unterscheiden.

Die erfindungsgemäße Vorrichtung kann ferner eine Objekterfassungseinrichtung umfassen, die mit der Signaltrennungseinrichtung bzw. einem Ausgang dieser Einrichtung verbunden ist. Die Objekterfassungseinrichtung ist eingerichtet, Signalkomponenten mit vergleichbaren Laufzeiten und unterschiedlicher Frequenz einem gemeinsamen Objekt zuzuordnen, das sich in Erstreckungswinkeln der zugehörigen Richtkeulen befindet (und somit der entsprechenden Signalkomponente zuzuordnen ist). Die Objekterfassungseinrichtung kann alternativ oder in Kombination hierzu eingerichtet sein, Signalkomponenten mit unterschiedlichen Laufzeiten und unterschiedlicher Frequenz unterschiedlichen Objekten zuzuordnen. Diese Objekte befinden sich jeweils in zumindest einem Erstreckungswinkel der Richtkeulen und werfen somit einen Puls zurück, der der entsprechenden Signalkomponente (d.h. Frequenzverschiebung) entspricht. Alternativ oder in Kombination hiermit kann die Objekterfassungseinrichtung eingerichtet sein, Signalkomponenten, deren Frequenz oder Frequenzen nur einer oder einer Untergruppe der Richtkeulen zugeordnet werden kann, einem Objekt zuzuordnen, das sich nur in dieser oder in der Untergruppe der Richtkeulen befindet, und gemäß der zugehörigen Laufzeit bzw. Laufzeiten vom Wandler beabstandet ist.

Die Objekterfassungseinrichtung entspricht daher einer Auswertungseinrichtung für Pulsechosignale, wobei diese für Signalkomponenten des gleichen Pulses getrennt voneinander hinsichtlich der Signallaufzeiten bearbeitet werden. Diese Einrichtung kann daher als Mehrkanaleinrichtung betrachtet werden, die in der Lage ist mehrere Signalkomponenten gleichzeitig zu bearbeiten und die Resultate zu einer komplexeren Ortsinformation oder Objektinformation (für mehrere Objekte) zu kombinieren. Ferner kann eine Anzeige vorgesehen sein, die die Objektinformation dem Fahrer darstellt oder es kann ein Speicher vorgesehen sein, in dem die Objektinformation abgelegt wird, wobei eine akustische oder optische Warneinrichtung von einem Kollisionsdetektor angesteuert wird, wenn in dem mit dem Kollisionsdetektor verbundenen Speicher Objektdaten vorliegen, die ein Objekt nahe dem Fahrzeug, insbesondere in dessen Fahrtrichtung, darstellen.

In einer besonders bevorzugten Ausführungsform hat der Wandler eine Richtcharakteristik mit einer Richtkeule, die, wenn der Wandler über eine Halterung des Wandlers an dem Fahrzeug befestigt ist, senkrecht zu der Längsachse des Fahrzeugs oder in Richtung der Längsachse zeigt. Mit anderen Worten ist der Wandler und die Halterung derart beschaffen, dass eine Richtkeule des Wandlers senkrecht oder parallel zu Fahrzeug ausgerichtet ist. Dadurch haben Objekte mit einer Relativbewegung zwischen Objekt und Fahrzeug parallel am Fahrzeug vorbei oder senkrecht auf das Fahrzeug gerichtet entweder einer maximale Frequenzverschiebung oder eine Frequenzverschiebung von null. Da eine weitere Richtkeule des Wandlers eine Signalkomponente mit einer Frequenzverschiebung kleiner als die maximale Frequenzverschiebung bzw. einer Frequenzverschiebung ungleich null erzeugt, können die Signalkomponenten einfacher voneinander getrennt werden.

In gleicher Weise kann der Wandler incl. Halterung aus Gründen der vereinfachten Berechnung, eine Richtkeule aufweist, die einen Winkel von 45° mit der Längsachse des Fahrzeugs bildet.

Die Erfindung betrifft insbesondere ein passives, teilautomatisches (d.h. nur lenkendes) oder automatisches (d.h. lenkendes und fahrgeschwindigkeitssteuerndes) Einparkassistenzsystem mit der erfindungsgemäßen Vorrichtung zur fahrzeuggestützten Objekterfassung.

Insbesondere kann die Erfindung mit einer erfindungsgemäßen Vorrichtung mit mehreren Wandlern und zugehörigen Erfassungskomponenten realisiert werden, wobei die Objektinformationen der Wandler zusammengetragen werden in einer Kombinationsvorrichtung, die die Objektinformationen zu einer gemeinsamen Darstellung vereint. Ferner werden die Objekte mit einer Relativgeschwindigkeitsinformation versehen, die anhand dem Betrag und dem Vorzeichen der Frequenzverschiebung ermittelt wird.

### Kurze Beschreibung der Zeichnungen

Die Figur 1 zeigt ein mit einer erfindungsgemäßen Vorrichtung ausgerüstetes Fahrzeug in einer Situation zur Erläuterung des erfindungsgemäßen Verfahrens; und
Die Figur 2 zeigt eine weitere Situation zur Erläuterung des erfindungsgemäßen Verfahrens.

### Ausführungsformen der Erfindung

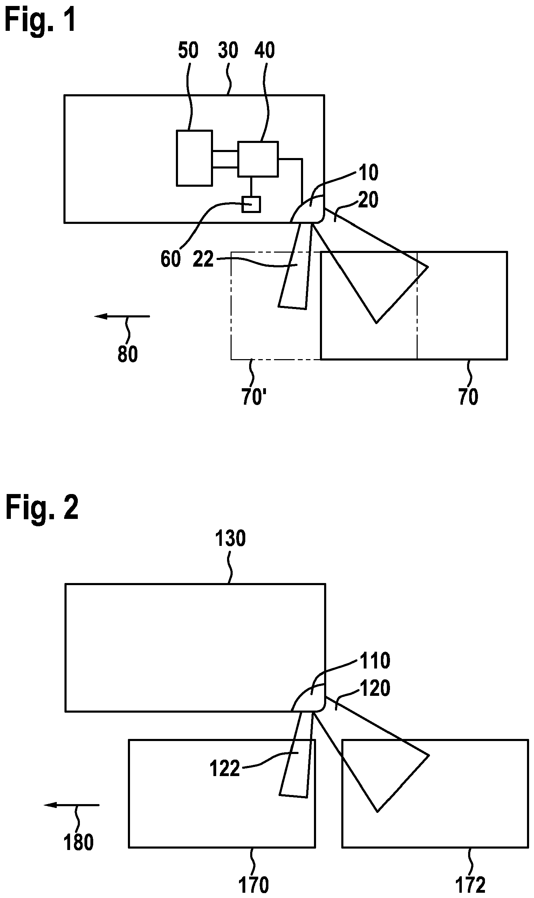

In Figur 1 ist ein Fahrzeug 30 dargestellt, das mit einem Wandler 10 ausgerüstet ist, wobei der Wandler 10 eine Richtcharakteristik aufweist, die zwei Richtkeulen hat. In Figur 1 sind die Richtkeulen 20, 22 symbolisch dargestellt, wobei in Figur 1 sowohl der überdeckte Winkel als auch die Reichweite dargestellt ist. Die Reichweite endet mit der abschließenden Linie, die beiden dargestellten Schenkel miteinander verbindet.

Der Wandler 10 als Teil der Vorrichtung ist mit einer Signaltrennungseinrichtung 40 verbunden und liefert die gewandelten elektrischen Signale an die Signaltrennungseinrichtung 40. Diese werden in der Signaltrennungseinrichtung 40 frequenzabhängig in unterschiedliche stark frequenzverschobene Signalkomponenten unterteilt, die an eine Laufzeiterfassungseinrichtung 50 abgegeben werden. Zusätzlich umfasst die erfindungsgemäße Vorrichtung eine Frequenzverschiebungs-Messeinheit 60. Diese ist eingerichtet, die Frequenzverschiebungen der einzelnen Komponenten (gegenüber der Sendefrequenz) zu ermitteln. Die Frequenzverschiebungs-Messeinheit 60 ist daher mit der Signaltrennungseinrichtung 40 verbunden. In einer nicht dargestellten Variante kann die Frequenzverschiebungs-Messeinheit insbesondere mit den Ausgängen der Signaltrennungseinrichtung verbunden sein, an denen die Signalkomponenten anliegen. Die Vorrichtung umfasst alle Erfassungskomponenten 10, 40, 50 und 60. Die Vorrichtung selbst umfasst nicht das Fahrzeug 30, vielmehr ist die Vorrichtung lediglich zur Befestigung an dem Fahrzeug 30 angeordnet.

In der in Figur 1 dargestellten Situation bewegt sich ein weiteres Fahrzeug 70 an dem Fahrzeug 30 vorbei gemäß der Bewegungsrichtung 80. Wenn sich das weitere Fahrzeug 70 (welches eines einer Vielzahl möglicher Verkehrsobjekte darstellt) an der Position befindet, wie sie mit durchgezogener Linie dargestellt ist, und sich am Fahrzeug 30 vorbei bewegt, ergibt sich durch die Neigung der Richtkeule 20 zur Senkrechten der Bewegungsrichtung 80 eine durch Dopplereffekt verursachte Frequenzverschiebung hin zu höheren Frequenzen. Die Richtkeule 22 würde eine andere Frequenzverschiebung (im wesentlich keine) aufweisen, jedoch befindet sich das Fahrzeug 70 nicht in der Richtkeule 22. Es ergibt sich daher nur eine Signalkomponente, nämlich die der Richtkeule 20, während keine Signalkomponente erzeugt wird, die von der Richtkeule 22 stammt. Daher wird eine Frequenzverschiebung hin zu höheren Frequenzen ermittelt, und darauf geschlossen, dass sich ein Objekt in Richtkeule 20 befindet, nicht jedoch in Richtkeule 22. Es ergibt sich daher eine höhere Auflösung. Zudem kann anhand des Dopplereffekts auf die Relativgeschwindigkeit des Fahrzeugs 70 geschlossen werden. Aus den Objektdaten kann geschlossen werden, dass sich das Fahrzeug 70 versetzt zu Fahrzeug 30 aufhält, sich jedoch nicht neben Fahrzeug 30. Aus der Frequenzverschiebung kann geschlossen werden, dass das Fahrzeug aufschließt und sich in einen Bereich neben Fahrzeug 30 hinein bewegt.

Eine darauffolgende Situation ist mit gestrichelter Linie dargestellt. Das Fahrzeug 70' ist in beiden Richtkeulen 20, 22, so dass sich zwei Signalkomponenten ergeben. Eine erste Signalkomponente hat im wesentlichen keine oder nur eine geringe Dopplerverschiebung hin zu geringeren Frequenzen, wobei die erste Signalkomponente von der Richtkeule 20 stammt. Eine zweite Signalkomponente hat eine vergleichsweise starke Dopplerverschiebung hin zu höheren Frequenzen, wobei die zweite Signalkomponente von der Richtkeule 22 stammt. Die Frequenzverschiebungen unterscheiden sich in stärke und Vorzeichen. Die erste und die zweite Signalkomponente zeigen beide die gleiche Laufzeitverzögerung, so dass auf den gleichen Abstand und somit auf das selbe Objekt geschlossen werden kann, das durch die Signalkomponenten detektiert wird. Es kann ferner direkt auf ein Objekt geschlossen werden, dass sich in beiden Richtkeulen 20, 22 befindet. Daher erlaubt die Erfindung auch eine Größenauflösung mittels der beiden Richtkeulen.

In Figur 2 ist eine weitere Situation zur Erläuterung der Erfindung dargestellt. Ein erfindungsgemäß ausgestattetes Fahrzeug 130 ist mit einem Wandler 110 ausgestattet, der zwei Richtkeulen aufweist. Zunächst fährt ein erstes, weiteres Fahrzeug in den Sensorbereich des Wandlers 110 ein, gefolgt von einem zweiten, weiteren Fahrzeug 172. Während des Einfahrens ergibt sich eine erste Signalkomponente durch das eintretende erste Fahrzeug durch Richtkeule 120. Es kommt bei weiterem Einfahren zu einer zusätzlichen zweiten Signalkomponente durch Fahrzeug 170, das in Richtkeule 122 eintritt. Bei Bewegung der Fahrzeuge weiter in Richtung 180 tritt das erste Fahrzeug aus der Richtkeule 170 aus und Fahrzeug 172 tritt in die Richtkeule 122 ein. Bei ausreichendem Abstand zwischen den Fahrzeugen (größer als die Richtkeulenbreite) wird der Zwischenraum detektiert und die beiden Fahrzeuge werden als einzelne Objekte erfasst, insbesondere wird das Fahrzeug 172 als individuelles Objekt erfasst und erzeugt eine Signalkomponente über Richtkeule 120, während Fahrzeug 170 eine Signalkomponente über Richtkeule 122 erzeugt. In der in Figur 2 dargestellten Situation ist Fahrzeug 170 bereits aus der Richtkeule 120 ausgefahren, so dass die vorgehend beschriebenen Erfassungen ermöglicht werden und sich die entsprechenden Signalkomponenten ergeben. Bei weiterer Bewegung in Richtung 180 tritt Fahrzeug 170 aus der Richtkeule 122 aus und die Lücke zwischen den beiden Fahrzeugen 170, 172 wird durch Richtkeule 122 erfasst, indem die Signalkomponente, die von dieser Richtkeule erzeugt wird, ausbleibt. In sämtlichen Situationen, die anhand Figur 2 beschrieben sind, ergibt sich nur eine geringe Frequenzverschiebung zu kleineren Frequenzen hin, die die Signalkomponente der Richtkeule 122 darstellt, während Richtkeule 120 ein größere Frequenzverschiebung zu größeren Frequenzen hin erzeugt. Dadurch lassen sich die Richtkeulen unterscheiden und die Objekte mit feinerer Winkelauflösung erfassen. Ohne die frequenzverschiebungsabhängige Unterscheidung würden beide Fahrzeuge nur als ein einzelnes Objekt erfasst werden.

Wenn die beiden Fahrzeuge 170, 172 (im Gegensatz zur Darstellung von Figur 2) unterschiedlich zum Fahrzeug 130 beabstandet wären, so können anhand der Gruppierung ähnlicher, erfasster Laufzeiten ferner die Fahrzeuge 170, 172 anhand dieser Information hinsichtlich ihres Ortes (relativ zu Fahrzeug 130) unterschieden werden, wobei einem Fahrzeug gegebenenfalls eine zugehörige Richtkeule zugeordnet werden kann und einem anderen Fahrzeug, das näher oder weiter entfernt liegt, die andere Richtkeule zugeordnet werden kann. Es ist ferner unmittelbar ersichtlich, dass ein erstes Fahrzeug innerhalb der Reichweite des Wandlers nicht den ganzen Wandler blockiert, sondern es kann ein anderes Fahrzeug anhand einer Lücke zwischen den Fahrzeugen, anhand unterschiedlicher Geschwindigkeiten und insbesondere anhand der individuellen Auswertung der Signalkomponenten individuell erfasst werden.

Ein weiterer Wandler kann an der vorderen, unteren Ecke vorgesehen sein, der die seitliche Umgebung des Fahrzeugs abtastet, vorzugsweise gemäß dem erfindungsgemäßen Verfahren.

Allgemein kann das Verfahren und die Vorrichtung insbesondere für Spurhaltesysteme und Einparksysteme verwendet werden

## Patentansprüche

1. Verfahren zur fahrzeuggestützten Objekterfassung, umfassend: Aussenden eines Pulses in eine Umgebung mittels eines an einem Fahrzeug (30) angeordneten Wandlers (10) und Erfassen, mittels des Wandlers, eines Pulses, der von einem Objekt (70) in der Umgebung zurückgeworfen wird, wobei sich Wandler (10) und Objekt (70) relativ zueinander bewegen, wobei das Aussenden und/oder das Erfassen gemäß einer Richtcharakteristik des Wandlers ausgeführt wird, die mindestens zwei Richtkeulen (20, 22) aufweist, **dadurch gekennzeichnet, dass** ferner Signalkomponenten des zurückgeworfenen Pulses, die unterschiedliche Frequenzverschiebungen aufweisen, anhand der Frequenzverschiebung voneinander getrennt und jeweils einer der Richtkeulen zugeordnet werden, und für die unterschiedlichen Signalkomponenten jeweils eine Objekterfassung durchgeführt wird, wobei bei der Objekterfassung zwischen den Richtkeulen unterschieden wird, wobei eine Bewegung eines Objekts (70) aufgrund der unterschiedlichen Ausrichtungen der Richtkeulen in Radialbewegungskomponenten aufgeteilt wird, die zu den unterschiedlichen Frequenzverschiebungen der Pulse führen, wobei für jede Richtkeule eine Ortsinformation anhand einer Pulslaufzeit derjenigen Signalkomponente erzeugt wird, die der jeweiligen Richtkeule zugeordnet ist, und für jede Richtkeule eine Radialgeschwindigkeitsinformation anhand der Frequenzverschiebung derjenigen Signalkomponente erzeugt wird, die der jeweiligen Richtkeule zugeordnet ist, und wobei das Erzeugen der Ortsinformation umfasst: Kombinieren eines Abstands, der sich aus der Pulslaufzeit ergibt, mit der Ausrichtung der zugehörigen Richtkeule, und Vorsehen von Ortsinformation als Koordinaten eines Polarkoordinatensystems oder eines kartesischen Koordinatensystems.

2. Verfahren nach Anspruch 1, wobei Objektkomponenten, die durch unterschiedliche Richtkeulen erfasst werden, zu einem gemeinsamen Objekt zugeordnet werden, wenn für die Objektkomponenten vergleichbare Abstände erfasst werden; zu unterschiedlichen Objekten in den unterschiedlichen Richtkeulen zugeordnet werden, wenn für die Objektkomponenten unterschiedlichen Abstände erfasst werden; und eine Objektkomponente, die in nur einer oder in einer Untergruppe der Richtkeulen erfasst wird, zu einem Objekt zugeordnet wird, das sich nur in dieser oder in der Untergruppe der Richtkeulen befindet.

3. Verfahren nach einem der vorangehenden Ansprüche, wobei der Puls als Ultraschallpuls oder als elektromagnetischer Puls, insbesondere als elektromagnetischer Mikrowellenpuls, ausgesendet wird, der einen vordefinierten Frequenzverlauf aufweist, mit dem der erfasste Puls verglichen wird.

4. Verfahren nach einem der vorangehenden Ansprüche, wobei der Puls von einem Fahrzeug (30) aus ausgesendet und empfangen wird, und der mindestens eine Wandler (10) an einer Außenseite des Fahrzeugs angeordnet und in die Umgebung ausgerichtet ist.

5. Verfahren nach Anspruch 4, wobei sich das Fahrzeug (30) relativ zu dem Objekt (70) und auf einem Untergrund bewegt, das ortsfest auf dem Untergrund angeordnet ist, wobei das Objekt ein geparktes Fahrzeug ist, und wobei das Verfahren als Einparkassistenzverfahren vorgesehen ist, das ferner einen zulässigen Fahrbereich darstellt, wobei das Darstellen eines zulässigen Fahrbereichs auf der Objekterfassung basiert.

6. Vorrichtung zur fahrzeuggestützten Objekterfassung, umfassend: einen Wandler (10) mit einer Richtcharakteristik, die mindestens zwei Richtkeulen (20, 22) aufweist, und der zur Befestigung an einem Fahrzeug (30) eingerichtet ist, eine mit dem Wandler verbundene frequenzselektive Signaltrennungseinrichtung (40), die eingerichtet ist, Signale des Wandlers zu empfangen und in Signalkomponenten unterschiedlicher Frequenz zu trennen, sowie eine Laufzeiterfassungseinrichtung (50), die mit der Signaltrennungseinrichtung verbunden ist und eingerichtet ist, für zumindest eine der Signalkomponenten eine Laufzeit zu erfassen,
**dadurch gekennzeichnet,**
**dass** die Vorrichtung eingerichtet ist, ein Verfahren nach einem der vorhergehenden Ansprüche durchzuführen.

7. Vorrichtung nach Anspruch 6, die ferner eine Objekterfassungseinrichtung umfasst, die mit der Signaltrennungseinrichtung verbunden ist, und eingerichtet ist, Signalkomponenten mit vergleichbaren Laufzeiten und unterschiedlicher Frequenz einem gemeinsamen Objekt zuzuordnen, das sich in Erstreckungswinkeln der zugehörigen Richtkeulen befindet, Signalkomponenten mit unterschiedlichen Laufzeiten und unterschiedlicher Frequenz unterschiedlichen Objekten zuzuordnen, die sich jeweils in zumindest einem Erstreckungswinkel der Richtkeulen befinden, und Signalkomponenten, deren Frequenz oder Frequenzen nur einer oder einer Untergruppe der Richtkeulen zugeordnet werden kann, einem Objekt zuzuordnen, das sich nur in dieser oder in der Untergruppe der Richtkeulen befindet, und gemäß der zugehörigen Laufzeit bzw. Laufzeiten vom Wandler beabstandet ist.

8. Vorrichtung nach Anspruch 6 oder 7, wobei der Wandler (10) ein akustischer Wandler, insbesondere ein piezoelektrischer oder elektromagnetischer Ultraschallwandler ist, der in einer Halterung befestigt ist, die sich teilweise in einer Abstrahlraumhälfte des Wandlers erstreckt und die aufgrund ihrer Geometrie eingerichtet ist, die Richtcharakteristik mit mindestens einem relativen Minimum vorzusehen, das mindestens zwei Richtkeulen trennt, insbesondere als trichterförmige Halterung, oder wobei der Wandler eine Antenne oder eine Antennenanordnung ist, die aufgrund ihrer Anordnung und/oder aufgrund von Phasenverschiebungselementen eine Richtcharakteristik mit mindestens einem relativen Minimum vorsieht.

## Claims

1. Method for vehicle-assisted object detection, comprising: transmitting a pulse into surroundings by means of a transducer (10) arranged on a vehicle (30) and detecting, by means of a transducer, a pulse that is reflected by an object (70) in the surroundings, wherein transducer (10) and object (70) move relative to one another, wherein the transmitting and/or the detecting is carried out according to a directional characteristic of the transducer, which directional characteristic has at least two directional lobes (20, 22), **characterized in that**, further, signal components of the reflected pulse that have different frequency shifts are separated from one another on the basis of the frequency shift and are each assigned to one of the directional lobes, and a respective object detection is performed for the different signal components, wherein the object detection involves distinguishing between the directional lobes, wherein a motion of an object (70) is split, on the basis of the different orientations of the directional lobes, into radial motion components that lead to the different frequency shifts of the pulses, wherein for each directional lobe a piece of location information is produced on the basis of a pulse delay time for that signal component that is assigned to the respective directional lobe, and for each directional lobe a piece of radial velocity information is produced on the basis of the frequency shift of that signal component that is assigned to the respective directional lobe,
and wherein
producing the location information comprises: combining a distance obtained from the pulse delay time with the orientation of the associated directional lobe, and providing location information as coordinates of a polar coordinate system or a Cartesian coordinate system.

2. Method according to Claim 1, wherein object components that are detected by different directional lobes are assigned to a common object if comparable distances are detected for the object components; are assigned to different objects in the different directional lobes if different distances are detected for the object components; and an object component that is detected in only one or in a subgroup of the directional lobes is assigned to an object that is only in this directional lobe or in the subgroup of the directional lobes.

3. Method according to either of the preceding claims, wherein the pulse is transmitted as an ultrasonic pulse or as an electromagnetic pulse, particularly as an electromagnetic microwave pulse, that has a predefined frequency profile with which the detected pulse is compared.

4. Method according to one of the preceding claims, wherein the pulse is transmitted and received from a vehicle (30), and the at least one transducer (10) is arranged on an outside of the vehicle and is oriented into the surroundings.

5. Method according to Claim 4, wherein the vehicle (30) moves relative to the object (70) and on a ground, said object being arranged at a fixed location on the ground, wherein the object is a parked vehicle and wherein the method is divided as a parking assistance method that further depicts an admissible driving area, the depiction of an admissible driving area being based on the object detection.

6. Apparatus for vehicle-assisted object detection, comprising: a transducer (10) having a directional characteristic that has at least two directional lobes (20, 22), which transducer is set up for mounting on a vehicle (30), a frequency-selective signal separation device (40) that is connected to the transducer and that is set up to receive signals of the transducer and to separate them into signal components of different frequency, and a delay time detection device (50) that is connected to the signal separation device and is set up to detect a delay time for at least one of the signal components,
**characterized**
**in that** the apparatus is set up to perform a method according to one of the preceding claims.

7. Apparatus according to Claim 6, which further comprises an object detection device that is connected to the signal separation device, and is set up to assign signal components having comparable delay times and different frequency to a common object that is at angular extents of the associated directional lobes, to assign signal components having different delay times and different frequency to different objects that are each at at least one angular extent of the directional lobes, and to assign signal components whose frequency or frequencies can be assigned only to one or to a subgroup of the directional lobes to an object that is only in this directional lobe or in the subgroup of the directional lobes, and is at a distance from the transducer according to the associated delay time or delay times.

8. Apparatus according to Claim 6 or 7, wherein the transducer (10) is an acoustic transducer, particularly a piezoelectric or electromagnetic ultrasonic transducer, that is mounted in a bracket that partially extends in an emission space half of the transducer and that, on the basis of its geometry, is set up to provide the directional characteristic having at least one relative minimum that separates at least two directional lobes, particularly as a funnel-shaped bracket, or wherein the transducer is an antenna or an antenna arrangement that, on the basis of its arrangement and/or on the basis of phase shift elements, provides a directional characteristic having at least one relative minimum.

## Revendications

1. Procédé de détection d'objets assistée par véhicule, comprenant : l'envoi d'une impulsion dans un environnement au moyen d'un convertisseur (10) disposé au niveau d'un véhicule (30) et détection, au moyen du convertisseur, d'une impulsion qui a été rejetée dans l'environnement par un objet (70), le convertisseur (10) et l'objet (70) bougeant l'un par rapport à l'autre, l'envoi et/ou la détection étant réalisés selon une caractéristique d'orientation du convertisseur qui présente au moins deux lobes d'orientation (20, 22), **caractérisé en ce qu'**en outre des composants de signaux de l'impulsion rejetée présentant différents décalages de fréquence sont en outre séparés les uns des autres à partir du décalage de fréquence et associés respectivement à un des lobes d'orientation et une détection d'objets est effectuée respectivement pour les différents composants de signaux, lors de la détection de signaux, les lobes d'orientation étant différenciés, un mouvement d'un objet (70) étant, sur la base des différentes orientations des lobes d'orientation, séparé en composants de mouvement radial qui aboutissent aux différents décalages de fréquence des impulsions, pour chaque lobe d'orientation, une information locale étant générée à partir d'une durée d'impulsion du composant de signaux qui est associé au lobe d'orientation respectif et, pour chaque lobe d'orientation, une information de vitesse radiale étant générée à partir du décalage de fréquence du composant de signaux qui est associé au lobe d'orientation respectif,
et la génération de l'information locale comprenant : la combinaison d'une distance qui résulte de la durée d'impulsion avec l'orientation du lobe d'orientation associé et la prévision d'une information locale sous forme de coordonnées d'un système de coordonnées polaires ou d'un système de coordonnées cartésiennes.

2. Procédé selon la revendication 1, dans lequel des composants de l'objet qui sont détectés par différents lobes d'orientation sont associés à un objet commun si des distances comparables sont détectées pour les composants de l'objet ; sont associés à différents objets dans les lobes d'orientation si des distances différentes sont détectées pour les composants de l'objet ; et un composant d'objet qui est détecté dans un seul ou dans un sous-groupe des lobes d'orientation est associé à un objet qui se trouve seulement dans ce groupe ou dans le sous-groupe des lobes d'orientation.

3. Procédé selon une des revendications précédentes, dans lequel l'impulsion est envoyée sous forme d'une impulsion ultrasonore ou d'une impulsion électromagnétique, en particulier sous forme d'une impulsion à micro-ondes électromagnétique, qui présente une évolution de fréquence prédéfinie à laquelle l'impulsion détectée est comparée.

4. Procédé selon une des revendications précédentes, dans lequel l'impulsion est envoyée et reçue depuis un véhicule (30) et l'au moins un convertisseur (10) est disposé au niveau d'une face extérieure du véhicule et orienté vers l'environnement.

5. Procédé selon la revendication 4, dans lequel le véhicule (30) se déplace par rapport à l'objet (70) et sur une base, l'objet étant disposé fixement sur la base, l'objet étant un véhicule garé et le procédé étant prévu sous forme d'un procédé d'assistance au stationnement qui représente en outre une zone de conduite autorisée, la représentation d'une zone de conduite autorisée étant basée sur la détection d'objets.

6. Dispositif de détection d'objets assistée par véhicule, comprenant : un convertisseur (10) doté d'une caractéristique d'orientation qui présente au moins deux lobes d'orientation (20, 22) et qui est conçu pour être fixé à un véhicule (30), un dispositif de séparation de signaux (40) à fréquence sélective connecté au convertisseur, qui est conçu pour recevoir des signaux du convertisseur et les séparer en composants de signaux de fréquences différentes, de même qu'un dispositif d'enregistrement de durée (50) qui est connecté au dispositif de séparation de signaux et conçu pour enregistrer une durée pour au moins un des composants de signaux,
**caractérisé en ce que**
le dispositif est conçu pour réaliser un procédé selon une des revendications précédentes.

7. Dispositif selon la revendication 6, qui comprend en outre un dispositif de détection d'objets qui est connecté au dispositif de séparation de signaux et est conçu pour associer des composants de signaux de durées comparables et de fréquence différente à un objet commun qui se trouve dans les angles d'extension des lobes d'orientation associés, des composants de signaux de durées différentes et de fréquence différente d'objets différents qui se trouvent respectivement dans au moins un angle d'extension des lobes d'orientation et des composants de signaux dont la fréquence ou les fréquences ne peuvent être associées qu'à un seul ou un sous-groupe des lobes d'orientation à un objet qui se trouve seulement dans ce ou dans le sous-groupe des lobes d'orientation et est espacé du convertisseur suivant la durée ou les durées associées.

8. Dispositif selon la revendication 6 ou 7, dans lequel le convertisseur (10) est un convertisseur acoustique, en particulier un convertisseur ultrasonore piézo-électrique ou électromagnétique qui est fixé dans un support qui s'étend partiellement dans un demi-espace d'irradiation du convertisseur et qui est conçu, du fait de sa géométrie, pour prévoir la caractéristique d'orientation avec au moins un minimum relatif qui sépare au moins deux lobes d'orientation, se présentant en particulier sous forme de support en forme d'entonnoir, ou le convertisseur étant une antenne ou un dispositif d'antenne qui, du fait de sa disposition et/ou du fait d'éléments de décalage de phase, prévoit une caractéristique d'orientation comportant au moins un minimum relatif.
